# EUROPEAN PATENT SPECIFICATION

(11) **EP 4 110 046 B1**
(45) Date of publication and mention of the grant of the patent: **10.04.2024**
(21) Application number: 21709143.8
(22) Date of filing: 26.02.2021
(51) Int. Cl.: A01K 1/00, E06B 11/08, E06B 11/02

(54) **ONE-WAY GATE FOR ALLOWING INDOOR LIVESTOCK TO PASS IN ONE DIRECTION**
EINWEGTOR ZUR ERMÖGLICHUNG DES DURCHGANGS VON STALLTIEREN IN EINE RICHTUNG
BARRIÈRE UNIDIRECTIONNELLE PERMETTANT À DU BÉTAIL D'INTÉRIEUR DE PASSER DANS UN SENS

(30) Priority: 27.02.2020 NL 2025007
(43) Date of publication of application: 04.01.2023
(73) Proprietor: DLC B.V., 5161 PH Sprang-Capelle (NL)
(72) Inventor: VAN DONGEN, Dirk Leonard Cornelis, 5161 PH Sprang-Capelle (NL)
(74) Representative: V.O.
(86) International application number: PCT/NL2021/050126
(87) International publication number: WO 2021/172988

(56) References cited:
- WO-A1-2004/095915
- GB-A- 925 683
- US-A1- 2009 133 635

## Description

### FIELD

The invention relates to a one-way gate for allowing indoor livestock, in particular a cow, to pass in one direction.

### BACKGROUND

Traditional one-way gates for allowing indoor livestock, in particular a cow, to pass in one direction are provided with a pivoting bracket and a frame which includes a body extending in a longitudinal direction along a longitudinal axis. An example of such a one-way gate is shown in WO 2004/095915 A1. The frame further includes a first and a second leg extending at right angles to the body, which are mutually spaced apart in the direction of the longitudinal axis. The pivoting bracket is received between these legs. The one-way gate is further provided with a hinge pin for pivotably mounting the pivoting bracket to the frame. The known one-way gate has a first embodiment where a first hinge axis defined by the hinge pin includes a first angle with a vertical axis so that the pivoting bracket under the influence of gravity pivots in a first pivoting direction. The known one-way gate further has a second embodiment which is mirror symmetrical to the first embodiment in the longitudinal direction. In this second embodiment, a second hinge axis defined by the hinge pin includes a second angle with the vertical axis so that the pivoting bracket under the influence of gravity pivots in a second pivoting direction, the second pivoting direction being opposite to the first pivoting direction.

In order not to allow the one-way gate to turn too far, the known one-way gate can be provided with a stop which limits a pivoting angle of the pivoting bracket. Preferably, the pivoting bracket can make an angle of more than 90 degrees. Such a stop is soldered, welded or otherwise fixedly attached to the frame. For this stop too, it holds that for the two embodiments it is arranged on the frame in mirrored fashion.

### SUMMARY

The first and second implementation of the known one-way gate are made as an assembly and sold to jointly close off a passage in, for example, a milking parlor or slaughterhouse.

Because a number of the parts of the known one-way gate are mirror symmetrical to provide the first and the second one-way gate, rather many different parts have to be manufactured. Also, upon replacement of a part, due attention is to be paid as to which implementation is involved, and sufficient spare parts need to be kept in stock twice, both for the first one-way gate and for the second one-way gate.

The object of the invention is to provide a one-way gate for allowing indoor livestock to pass in one direction, that preserves the advantages of the known one-way gate and eliminates, at least in part, the disadvantages.

The invention provides to this end a one-way gate according to claim 1. More particularly, the invention provides a one-way gate for allowing indoor livestock, in particular a cow, to pass in one direction. The one-way gate comprises a pivoting bracket, a frame, a hinge pin for pivotably mounting the pivoting bracket to the frame, and a stop. The frame comprises a body which extends in a longitudinal direction along a longitudinal axis and which in the longitudinal direction is vertically mountable to a standard. The frame further comprises a first and a second leg extending at right angles to the body, which are mutually spaced apart in the direction of the longitudinal axis for receiving with the first leg and the second leg a foot of the pivoting bracket. The first leg is provided with a first hole and a second hole, and the second leg is provided with at least one hole. The hinge pin has a first mounting position where the hinge pin extends through the first hole, through the foot of the pivoting bracket, and through a hole of the at least one hole in the second leg, so that a first hinge axis defined by the hinge pin includes a first angle with a vertical axis so that the pivoting bracket under the influence of gravity pivots in a first pivoting direction. The hinge pin has a second mounting position where the hinge pin extends through the second hole, through the foot of the pivoting bracket, and through a hole of the at least one hole in the second leg, so that a second hinge axis defined by the hinge pin includes a second angle with the vertical axis so that the pivoting bracket under the influence of gravity pivots in a second pivoting direction. The second pivoting direction is opposite to the first pivoting direction. The stop is mounted in one of the remaining holes through which the hinge pin does not extend.

The one-way gate according to the invention has within one embodiment of the invention the possibility of having two opposite pivoting directions. This one-way gate can be very simply converted from pivoting in the first mounting position to pivoting in the second mounting position. For this, no different parts are needed. A one-way gate pivoting in the first pivoting direction is assembled from the same parts as a one-way gate pivoting in the second direction. For converting the one-way gate from pivoting in the first pivoting direction to pivoting in the second pivoting direction, or vice versa, the stop and the pivoting bracket with hinge pin can be taken out of the holes in the legs of the frame and these parts can be re-placed in the other mounting position.

Due to different holes being used for the first and for the second mounting position, there is, upon mounting of the hinge pin in one of these two mounting positions, at least one hole left through which the hinge pin does not extend. By inserting a stop in this remaining hole, the stop does not have to be soldered, welded, or otherwise fixedly attached to the frame. This allows the position of the stop to be varied. Due to the place of the stop being variable as well, the stop does not limit the reversibility of the pivoting direction of the pivoting brackets, like a stop that is welded or otherwise fixedly attached to the frame does.

The one-way gate according to the invention is therefore simple to make pivotable in the first pivoting direction and pivotable in the second direction. Depending on the placement of the one-way gate at an end or longitudinal side of an opening to be closed off, the pivoting direction and the place of the stop can be chosen optimally. The place of the stop is then determinative of the pivoting range of the pivoting angle.

The invention also provides an assembly comprising two one-way gates according to the invention. The effects and advantages of the assembly are the same as the effects and the advantages of the one-way gate.

Further elaborations of the invention are described in the dependent claims and will be clarified in more detail hereinafter on the basis of examples, with reference to the figures.

### BRIEF DESCRIPTION OF THE FIGURES

Fig. 1 shows an example of an assembly of two one-way gates according to the invention, where the hinge pin of a first one-way gate is in the first mounting position and where the hinge pin of a second one-way gate is in the second mounting position, and where a passage between the two one-way gates is closed off by the assembly;
Fig. 2 shows a top plan view of the example of Figure 1;
Fig. 3 shows a front view of the example of Figure 1;
Fig. 4 shows the example of Figure 1, where the passage has been opened;
Fig. 5 shows a top plan view of the example of Figure 1, where the passage has been opened;
Fig. 6 shows a side view of a one-way gate of the assembly of Figure 5 in the direction of the line VI in Figure 5;
Fig. 7 shows a front view of the example of Figure 1, where the passage has been opened;
Fig. 8 shows a perspective rear/top/side view of the example of Figure 1, where the passage has been opened.

### DETAILED DESCRIPTION OF THE FIGURES

In the following detailed description of the figures, with the aid of reference numerals, reference is made to the example that is represented in the figures. The embodiments that are described in the detailed description, however, are not limited to the example that is shown in the figures but may also be implemented in a different way than shown in the example. The embodiments described in the detailed description should therefore be read and understood also without the reference numerals. The various embodiments to be described hereinafter can be used in combination with each other or independently of each other.

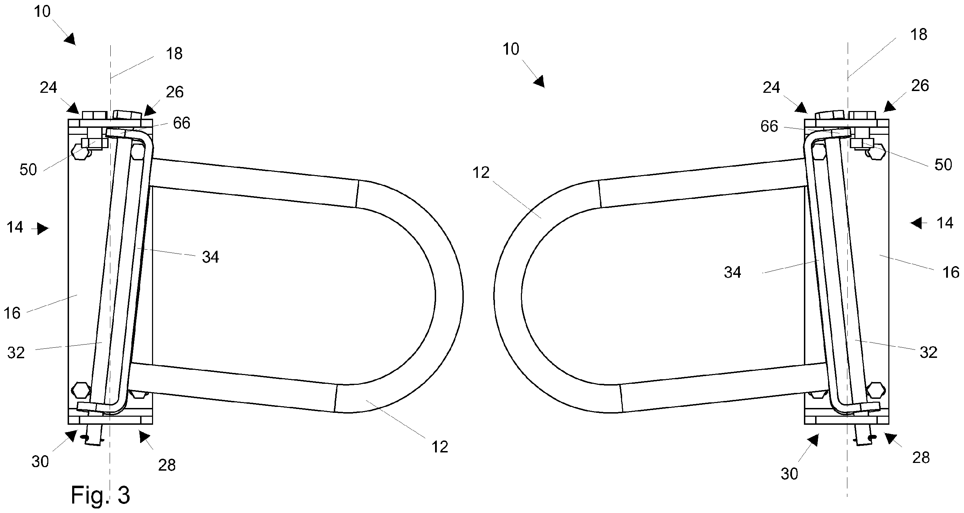

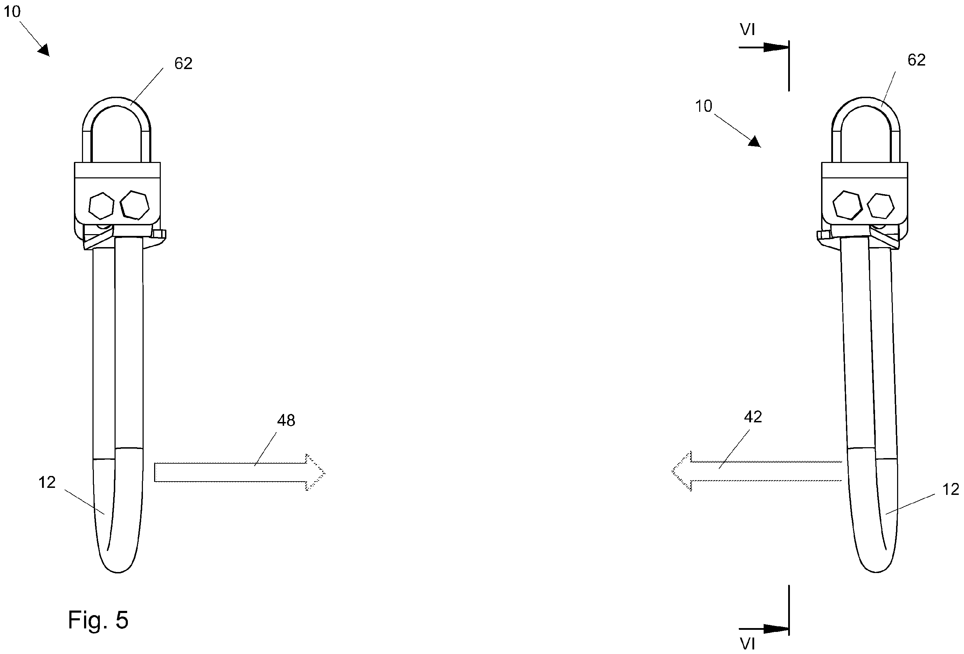

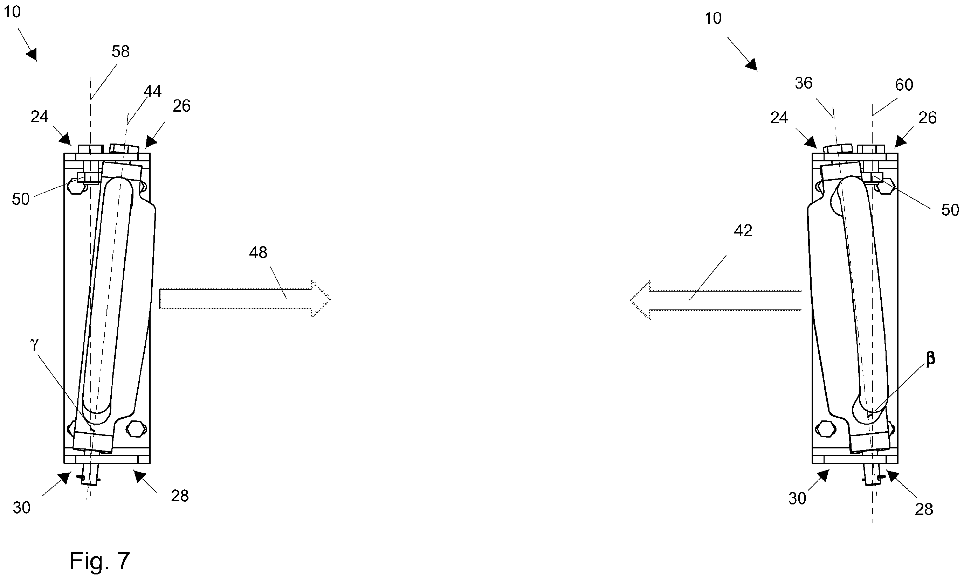

Most generally, the invention provides a one-way gate 10 for allowing indoor livestock, in particular a cow, to pass in one direction. The one-way gate comprises a pivoting bracket 12, a frame 14, a hinge pin 32 for pivotably mounting the pivoting bracket 12 to the frame 14, and a stop 50. The frame 14 comprises a body 16 which extends in a longitudinal direction along a longitudinal axis 18 (see Fig. 3) and which in the longitudinal direction is vertically mountable to a standard. The frame 14 further comprises a first 20 and a second 22 leg extending at right angles to the body, which are mutually spaced apart in the direction of the longitudinal axis 18 for receiving with the first leg 20 and the second leg 22 a foot 34 of the pivoting bracket 12. The first leg 20 is provided with a first hole 24 and a second hole 26. The second leg 22 is provided with at least one hole 28, 30. The hinge pin 32 has a first mounting position where the hinge pin extends through the first hole 24, through a foot 34 of the pivoting bracket 12, and through a hole 28, 30 of the at least one hole 28, 30 in the second leg 22, so that a first hinge axis 36 defined by the hinge pin 32 includes a first angle β (see Fig. 7, right-hand part) with a vertical axis 60 so that the pivoting bracket 12 under the influence of gravity pivots in a first pivoting direction 42 (see Figs. 5 and 7). The hinge pin 32 has a second mounting position where the hinge pin 32 extends through the second hole 26, through the foot 34 of the pivoting bracket 12, and through a hole 28, 30 of the at least one hole 28, 30 in the second leg 22, so that a second hinge axis 44 defined by the hinge pin 32 includes a second angle γ (see Fig. 7, left-hand part) with a vertical axis 58 so that the pivoting bracket 12 under the influence of gravity pivots in a second pivoting direction 48 (see Figs. 5 and 7). The second pivoting direction 48 is opposite to the first pivoting direction 42. The stop 50 is mounted in one of the remaining holes 24, 26, 28 or 30 through which the hinge pin 32 does not extend.

In the example shown in the figures, the foot 34 of the pivoting bracket 12 is received between the first leg 20 and the second leg 22 of the frame 14. It is also possible, of course, to have the foot 34 extend outside the first leg 20 and the second leg 22 and mount it on the sides of each leg 20, 22 remote from the other leg 20, 22.

By choosing the mounting position of the hinge pin 32, it is determined whether the pivoting bracket 12 pivots in the first pivoting direction 42 or in the second pivoting direction 48. The one-way gate 10 can be mounted on a side of a passage and is preferably mounted such that upon a pivoting in the chosen pivoting direction 42, 48, this passage is closed off and the one-way gate 10 takes up a closed position. The passage can be, for example, an opening in a partition between two sections in a milking parlor. Cows in such a milking parlor can push the one-way gate 10 against gravity and so against the pivoting direction 42, 48 defined by the hinge pin 32, from the closed position to an open position. After a cow has passed, the one-way gate 10 will pivot under the influence of gravity in the pivoting direction 42, 48 defined by the hinge pin 32, to the closed position. Passing the one-way gate 10 in the opposite direction then is not possible anymore for the cow.

In the example shown in the figures, the one-way gate 10 is mounted by way of a body bracket surface 56 on a side of a passage, such that the opening to be closed off is parallel to that body bracket surface 56. The pivoting bracket 12 is then pivotable between the closed position, where a stop surface 64 of the pivoting bracket 12 knocks against the body 16, and the open position where a stop surface 66 of the pivoting bracket 12 knocks against the stop 50. It is also possible that the opening to be closed off is perpendicular to the body bracket surface 56. The stop surface 64 of the pivoting bracket 12 will then in the closed position knock against the stop 50 and in the open position against the body 16.

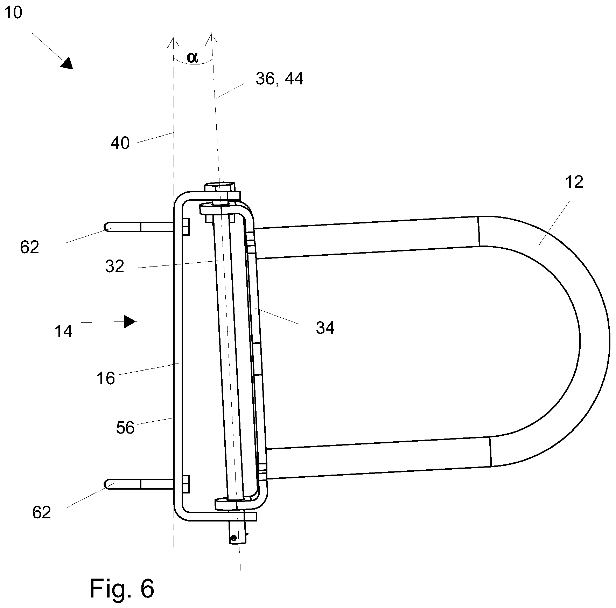

The first angle of the first hinge axis 36 with the vertical axis 40 and the second angle of the second hinge axis 44 with the vertical axis 40 can both be divided up into two angles. An example thereof is shown in Figures 6 and 7. Both the first hinge axis 36 and the second hinge axis 44 include an inclination angle α with the vertical body bracket surface 56 which extends parallel to the vertical axis 40 and the body 16 of the frame 14. The first hinge axis 36 also includes a first tilt angle β with a first vertical plane 60 which extends perpendicular to the vertical body bracket surface 56. The second hinge axis 44 also includes a second tilt angle γ with a second vertical plane 58 which extends perpendicular to the vertical body bracket surface 56. The first tilt angle β and the second tilt angle γ and also the inclination angle α provide for the pivoting of the pivoting bracket 12 in the first or in the second pivoting direction 42, 48 to the closed position under the influence of gravity.

The other effects and advantages of the one-way gate have already been described in the summary and these effects and advantages are understood to be inserted here by reference.

In an embodiment, which is not shown in the figures, the at least one hole in the second leg 22 comprises a third hole 28. The hinge pin then extends, both in the first mounting position and in the second mounting position, through the third hole 28. In order to have a first angle between the first hinge axis 36 and the vertical axis 40 that is greater than 0°, the third hole 28 must not be provided straight under the first hole 24. Likewise, in order to have a second angle between the second hinge axis 44 and the vertical axis 40 that is greater than 0°, the third hole 28 must not be provided straight under the second hole 26. For an optimum operation of the one-way gate 10, the third hole 28 can, in a horizontal respect, be best provided between the first hole 24 and the second hole 26, preferably in the middle between the first hole 24 and the second hole 26.

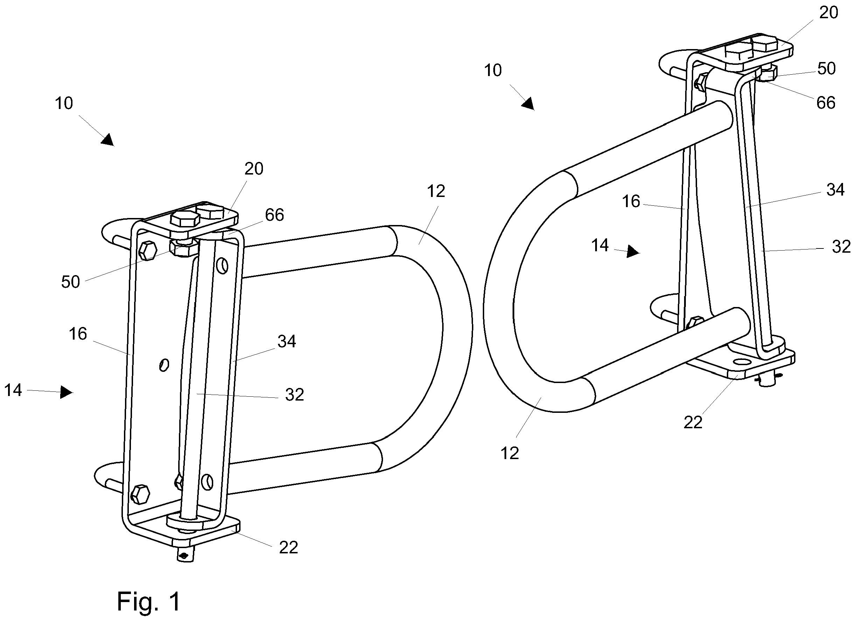

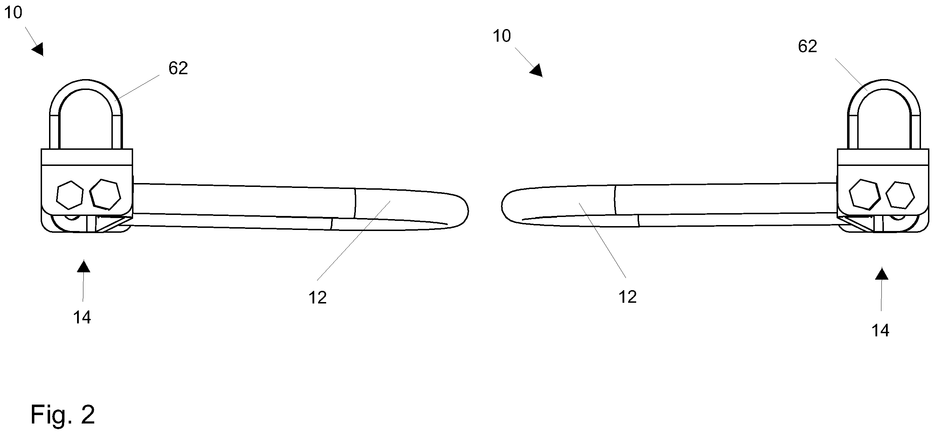

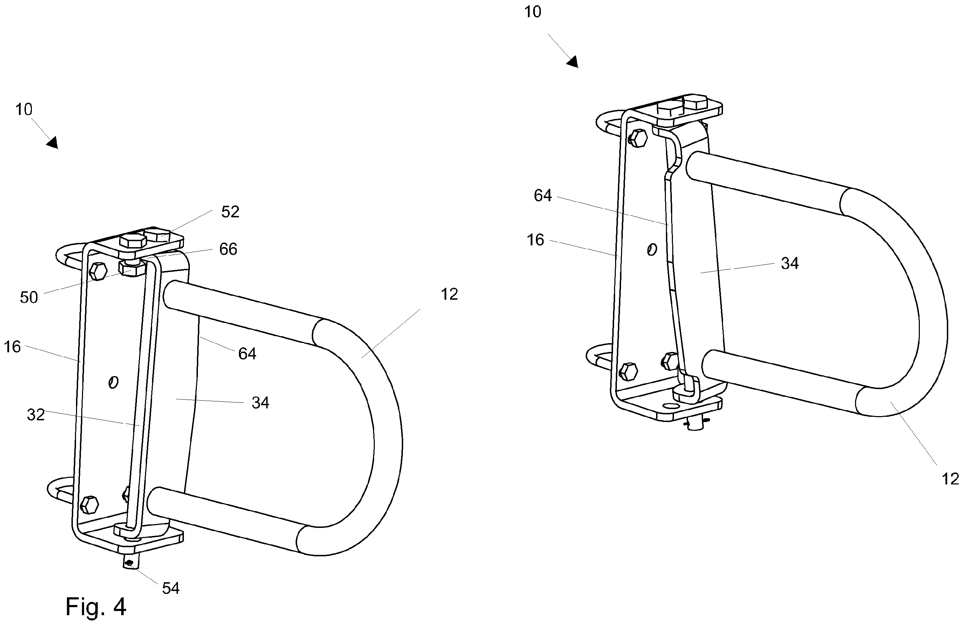

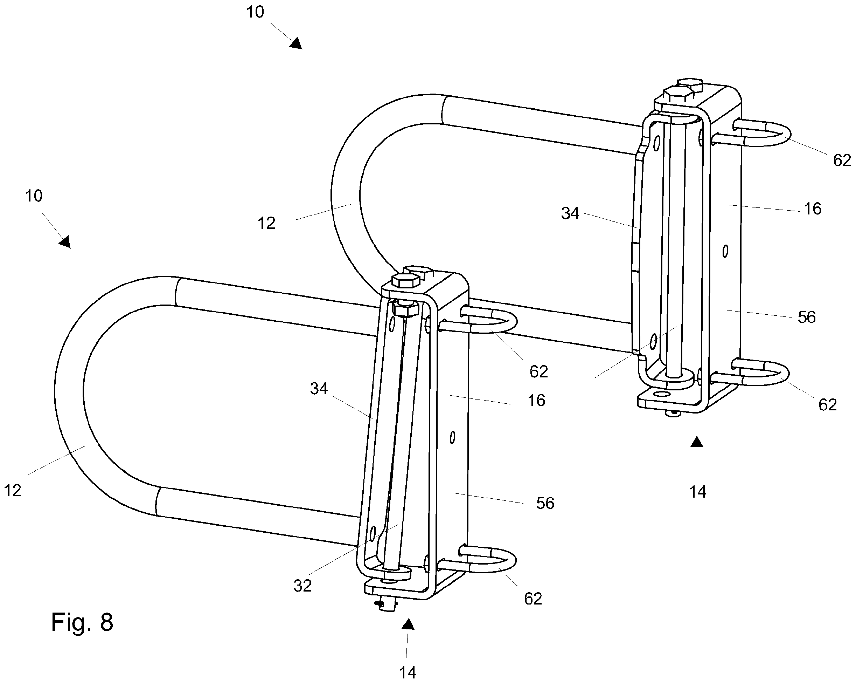

In another embodiment, shown in the figures, the at least one hole 28, 30 in the second leg 22 comprises a third hole 28 and a fourth hole 30. The hinge pin 32 in the first mounting position extends through the third hole 28, and the hinge pin 32 in the second mounting position extends through the fourth hole 30. A line through the first hole 24 and the fourth hole 30 can be parallel to the longitudinal axis 18. A line through the second hole 26 and the third hole 28 can be parallel to the longitudinal axis 18. In Figures 1, 2, 3, 4, 5, and 7, the hinge pin 32 of the right-hand one-way gate 10 is in the first mounting position, and the hinge pin 32 of the left-hand one-way gate 10 is in the second mounting position. Since Figure 8 is a partial rear view, in that figure the hinge pin 32 of the left-hand one-way gate 10 is in the first mounting position, and the hinge pin 32 of the right-hand one-way gate 10 is in the second mounting position.

By the use of four holes 24, 26, 28, 30, it is possible to make a frame 14 that is symmetrical with respect to a vertical median longitudinal plane. This augments the utility and employability of the frame 14 and hence also of the one-way gate 10.

In an embodiment, the stop 50 can comprise a bolt and a nut. A bolt and a nut provide a strong, reliable stop 50. Such an implementation of the stop 50 is simple to place in any one of the holes 24, 26, 28, 30 not occupied by the hinge pin 32.

In an embodiment, the hinge pin 32 is provided at a first end thereof with a head 52. The one-way gate is further provided with a cotter pin 54 which is mountable at a second end of the hinge pin 32. The head 52 ensures that the hinge pin 32 at the first end cannot move through a hole 24, 26, 28, 30 in a leg 20, 22 of the frame 14. The cotter pin 54 has the same effect at the second end of the hinge pin 32. Together, the head 52 and the cotter pin 54 ensure that the hinge pin 32 remains connected with the frame 14. Preferably, the end at which the head 52 is provided is placed at a hole 24, 26 at an upper side of the frame 14.

In an embodiment, the pivoting bracket 12 is pivotable through a pivoting angle in the range of 70-110°. The pivoting range is limited in that in a first extreme position the foot 34 by way of a stop surface 64 thereof runs up against the body 16 and in that in a second extreme position the foot 34 by way of a stop surface 66 thereof runs up against the stop 50.

The one-way gate 10 will generally be used to close off a passage in one direction. The pivoting range then has to be so large that the pivoting bracket 12 can be pivoted sufficiently far that the one-way gate 10 does not close off this passage anymore. At a pivoting angle of less than 70°, the one-way gate 10 still closes off the passage in part, as a result of which the room that an individual head of livestock, in particular a cow, has available to go through the passage is limited. Nor is too large a pivoting range desirable. If the pivoting bracket 12 pivots through the plane that is defined by the respective hinge axis 36, 44 and the vertical axis 40, then the force exerted by gravity on the pivoting bracket 12 can reverse direction and that force will actually force the pivoting bracket 12 to a further opened position instead of to the desired closed position. In the case of a pivoting range of more than 110°, this so-called swinging-through is a real danger. The presence and position of the stop 5 limits the pivoting range and prevents such swinging through.

In an embodiment, the frame 14 is provided with mounting means for mounting the frame 14 to, for instance, a standard. The mounting means can comprise, as is shown in the figures, a U-bracket 62 and two bolts. The U-bracket has two threaded legs which extend through holes in the body 16. The bolts engage the threaded legs of the U-bracket. The U-bracket extends around the standard. By tightening the bolts the frame 14 is fixed on the standard. In another embodiment, the mounting means can comprise, instead of a U-bracket 62, screws, bolts or similar to attach the frame 14 to a standard or wall.

The invention also provides an assembly comprising two one-way gates 10 according to the invention. The effects and advantages of the assembly have already been described in the summary and these effects and advantages are understood to be inserted here by quotation.

In an embodiment, the hinge pin 32 of a first of the two one-way gates 10 is in the first mounting position and the hinge pin 32 of a second of the two one-way gates 10 is in the second mounting position. Examples of this are shown in Figures 1-5, 7 and 8. In Figures 1-5 and 7, the hinge pin 32 of the right-hand one-way gate 10 is in the first mounting position, and the hinge pin 32 of the left-hand one-way gate 10 is in the second mounting position. Since Figure 8 is a partial rear view, in that figure the hinge pin 32 of the left-hand one-way gate 10 is in the first mounting position, and the hinge pin 32 of the right-hand one-way gate 10 is in the second mounting position.

Due to the hinge pin 32 of the first one-way gate 10 having been set in the first mounting position, the pivoting bracket of the first one-way gate pivots in the first pivoting direction 42. Due to the hinge pin 32 of the second one-way gate 10 having been set in the second mounting position, the pivoting bracket of the second one-way gate 10 pivots in the second pivoting direction 48. Since the first pivoting direction 42 is opposite to the second pivoting direction 48, the two one-way gates 10 of the assembly open in opposite direction. By mounting the two one-way gates 10 each on an opposite side of a passage, the direction in which a head of indoor cattle can pass both one-way gates 10 is the same. In this manner, the assembly can close off a passage in one direction, whereby the opening closed off by the assembly is twice as large as the opening that can be closed off by a single one-way gate 10.

The invention is not limited to the embodiments described. Variants falling within the framework of the invention as defined by the claims are possible.

### Key to reference signs

- 10: - one-way gate
- 12: - pivoting bracket
- 14: - frame
- 16: - body
- 18: - longitudinal axis
- 20: - first leg
- 22: - second leg
- 24: - first hole
- 26: - second hole
- 28: - third hole
- 30: - fourth hole
- 32: - hinge pin
- 34: - foot of the pivoting bracket
- 36: - first hinge axis
- 40: - vertical axis
- 42: - first pivoting direction
- 44: - second hinge axis
- 48: - second pivoting direction
- 50: - stop
- 52: - head
- 54: - cotter pin
- 56: - body bracket surface
- 58: - first vertical plane
- 60: - second vertical plane
- 62: - mounting means
- 64: - stop surface
- α: - inclination angle
- β: - first tilt angle
- γ: - second tilt angle

## Claims

1. A one-way gate (10) for allowing indoor livestock, in particular a cow, to pass in one direction, comprising:
- a pivoting bracket (12) comprising a foot (34);
- a frame (14) comprising a body (16) which extends in a longitudinal direction along a longitudinal axis (18) and which in the longitudinal direction is vertically mountable to a standard or a wall, wherein the frame (14) further comprises a first (20) and a second (22) leg extending at right angles to the body, which in the direction of the longitudinal axis (18) are mutually spaced apart for receiving with the first leg (20) and the second leg (22) the foot (34) of the pivoting bracket (12), wherein the first leg (20) is provided with a first hole (24) and a second hole (26), and wherein the second leg (22) is provided with at least one hole (28, 30); and
- a hinge pin (32) for pivotably mounting the pivoting bracket (12) to the frame (14), wherein the hinge pin (32) has a first mounting position where the hinge pin extends through the first hole (24), through the foot (34) of the pivoting bracket (12), and through a hole (28, 30) of the at least one hole (28, 30) in the second leg (22), so that a first hinge axis (36) defined by the hinge pin (32) includes a first angle (β) with a vertical axis (60) so that the pivoting bracket (12) under the influence of gravity pivots in a first pivoting direction (42),
said one-way gate (10) being **characterized in that** the hinge pin (32) has a second mounting position where the hinge pin (32) extends through the second hole (26), through the foot (34) of the pivoting bracket (12), and through a hole (28, 30) of the at least one hole (28, 30) in the second leg (22), so that a second hinge axis (44) defined by the hinge pin (32) includes a second angle (γ) with the vertical axis (58) so that the pivoting bracket (12) under the influence of gravity pivots in a second pivoting direction (48), wherein the second pivoting direction (48) is opposite to the first pivoting direction (42);
and
that said one-way gate (10) further comprises a stop (50) which is mounted in one of the remaining holes (24, 26, 28 or 30) through which the hinge pin (32) does not extend.

2. The one-way gate according to claim 1, wherein the at least one hole in the second leg (22) comprises a third hole (28), wherein the hinge pin (32) in the first mounting position and in the second mounting position extends through the third hole (28).

3. The one-way gate according to claim 1, wherein the at least one hole in the second leg (22) comprises a third hole (28) and a fourth hole (30), wherein the hinge pin (32) in the first mounting position extends through the third hole (28), and wherein the hinge pin (32) in the second mounting position extends through the fourth hole (30).

4. The one-way gate according to claim 3, wherein a line through the first hole (24) and the fourth hole (30) is parallel to the longitudinal axis (18), and/or wherein a line through the second hole (26) and the third hole (28) is parallel to the longitudinal axis (18).

5. The one-way gate according to any one of the preceding claims, wherein the stop (50) comprises a bolt and a nut.

6. The one-way gate according to any one of the preceding claims, wherein the hinge pin (32) at a first end is provided with a head (52) and wherein the one-way gate is further provided with a cotter pin (54) which is mountable at a second end of the hinge pin (32).

7. The one-way gate according to any one of the preceding claims, wherein the pivoting bracket (12) is pivotable through a pivoting angle in the range of 70 - 110°.

8. The one-way gate according to any one of the preceding claims, wherein the frame (14) is provided with mounting means (62) for mounting the frame (14) to the standard or the wall.

9. An assembly comprising two one-way gates according to any one of the preceding claims.

10. The assembly according to claim 9, wherein the hinge pin (32) of a first of the two one-way gates (10) is in the first mounting position and wherein the hinge pin (32) of a second of the two one-way gates (10) is in the second mounting position.

## Patentansprüche

1. Einwegtor (10) zum Ermöglichen des Durchgangs von Stalltieren, insbesondere einer Kuh, in eine Richtung, umfassend:
- eine Schwenkhalterung (12), umfassend einen Fuß (34);
- einen Rahmen (14), umfassend einen Körper (16), der sich in einer Längsrichtung entlang einer Längsachse (18) erstreckt und der in der Längsrichtung vertikal an einer Stütze oder einer Wand montierbar ist, wobei der Rahmen (14) ferner einen ersten (20) und einen zweiten (22) Schenkel, sich rechtwinklig zum Körper erstreckend, umfasst, die in der Richtung der Längsachse (18) zueinander beabstandet sind, um mit dem ersten Schenkel (20) und dem zweiten Schenkel (22) den Fuß (34) der Schwenkhalterung (12) aufzunehmen, wobei der erste Schenkel (20) mit einem ersten Loch (24) und einem zweiten Loch (26) versehen ist, und wobei der zweite Schenkel (22) mit wenigstens einem Loch (28, 30) versehen ist; und
- einen Scharnierstift (32) zum schwenkbaren Montieren der Schwenkhalterung (12) am Rahmen (14), wobei der Scharnierstift (32) eine erste Montageposition aufweist, in der sich der Scharnierstift durch das erste Loch (24), durch den Fuß (34) der Schwenkhalterung (12) und durch ein Loch (28, 30) des wenigstens einen Lochs (28, 30) im zweiten Schenkel (22) erstreckt, sodass eine erste durch den Scharnierstift (32) definierte erste Scharnierachse (36) einen ersten Winkel (β) mit einer vertikalen Achse (60) einschließt, sodass die Schwenkhalterung (12) unter dem Einfluss der Schwerkraft in eine erste Schwenkrichtung (42) schwenkt, wobei das Einwegtor (10) **dadurch gekennzeichnet ist, dass** der Scharnierstift (32) eine zweite
Montageposition aufweist, in bei der sich der Scharnierstift (32) durch das zweite Loch (26), durch den Fuß (34) der Schwenkhalterung (12) und durch ein Loch (28, 30) des wenigstens einen Lochs (28, 30) im zweiten Schenkel (22) erstreckt, sodass eine zweite, durch den Scharnierstift (32) definierte Scharnierachse (44) einen zweiten Winkel (γ) mit der vertikalen Achse (58) einschließt, sodass die Schwenkhalterung (12) unter dem Einfluss der Schwerkraft in eine zweite Schwenkrichtung (48) schwenkt, wobei die zweite Schwenkrichtung (48) der ersten Schwenkrichtung (42) entgegengesetzt ist; und dass das Einwegtor (10) ferner einen Anschlag (50) umfasst, der in einem der verbleibenden Löcher (24, 26, 28 oder 30) montiert ist, durch die sich der Scharnierstift (32) nicht erstreckt.

2. Einwegtor nach Anspruch 1, wobei das wenigstens eine Loch im zweiten Schenkel (22) ein drittes Loch (28) umfasst, wobei sich der Scharnierstift (32) in der ersten Montageposition und in der zweiten Montageposition durch das dritte Loch (28) erstreckt.

3. Einwegtor nach Anspruch 1, wobei das wenigstens eine Loch im zweiten Schenkel (22) ein drittes Loch (28) und ein viertes Loch (30) umfasst, wobei sich der Scharnierstift (32) in der ersten Montageposition durch das dritte Loch (28) erstreckt, und wobei sich der Scharnierstift (32) in der zweiten Montageposition durch das vierte Loch (30) erstreckt.

4. Einwegtor nach Anspruch 3, wobei eine Linie durch das erste Loch (24) und das vierte Loch (30) parallel zur Längsachse (18) verläuft und/oder wobei eine Linie durch das zweite Loch (26) und das dritte Loch (28) parallel zur Längsachse (18) verläuft.

5. Einwegtor nach einem der vorhergehenden Ansprüche, wobei der Anschlag (50) eine Schraube und eine Mutter umfasst.

6. Einwegtor nach einem der vorhergehenden Ansprüche, wobei der Scharnierstift (32) an einem ersten Ende mit einem Kopf (52) versehen ist und wobei das Einwegtor ferner mit einem Splint (54) versehen ist, der an einem zweiten Ende des Scharnierstifts (32) montierbar ist.

7. Einwegtor nach einem der vorhergehenden Ansprüche, wobei die Schwenkhalterung (12) durch einen Schwenkwinkel im Bereich von 70-110° schwenkbar ist.

8. Einwegtor nach einem der vorhergehenden Ansprüche, wobei der Rahmen (14) mit Montagemitteln (62) zum Montieren des Rahmens (14) an der Stütze oder der Wand versehen ist.

9. Baugruppe, umfassend zwei Einwegtore nach einem der vorhergehenden Ansprüche.

10. Baugruppe nach Anspruch 9, wobei sich der Scharnierstift (32) eines ersten der beiden Einwegtore (10) in der ersten Montageposition befindet und wobei sich der Scharnierstift (32) eines zweiten der beiden Einwegtore (10) in der zweiten Montageposition befindet.

## Revendications

1. Barrière unidirectionnelle (10) permettant à du bétail en intérieur, en particulier une vache, de passer dans une direction, comprenant :
- un support pivotant (12) comprenant un pied (34) ;
- un cadre (14) comprenant un corps (16) qui s'étend dans une direction longitudinale le long d'un axe longitudinal (18) et qui, dans la direction longitudinale, peut être monté verticalement sur un support ou un mur, dans laquelle le cadre (14) comprend en outre une première (20) et une deuxième (22) aile s'étendant à angle droit par rapport au corps, qui, dans la direction de l'axe longitudinal (18), sont mutuellement espacées pour recevoir avec la première aile (20) et la deuxième aile (22) le pied (34) du support pivotant (12), dans laquelle la première aile (20) est pourvue d'un premier trou (24) et d'un deuxième trou (26), et dans laquelle la deuxième aile (22) est pourvue d'au moins un trou (28, 30) ; et
- un axe d'articulation (32) pour monter à pivotement le support pivotant (12) sur le cadre (14), l'axe d'articulation (32) ayant une première position de montage dans laquelle l'axe d'articulation s'étend à travers le premier trou (24), à travers le pied (34) du support pivotant (12) et à travers un trou (28, 30) dudit au moins un trou (28, 30) formé dans la deuxième aile (22), de sorte qu'un premier axe de rotation (36) défini par l'axe d'articulation (32) comporte un premier angle (β) avec un axe vertical (60) de sorte que le support pivotant (12), sous l'influence de la gravité, pivote dans une première direction de pivotement (42),
ladite barrière unidirectionnelle (10) étant **caractérisée en ce que** l'axe d'articulation (32) a une deuxième position de montage dans laquelle l'axe d'articulation (32) s'étend à travers le deuxième trou (26), à travers le pied (34) du support pivotant (12) et à travers un trou (28, 30) dudit au moins un trou (28, 30) formé dans la deuxième aile (22), de sorte qu'un deuxième axe de rotation (44) défini par l'axe d'articulation (32) comporte un deuxième angle (γ) avec l'axe vertical (58) de sorte que le support pivotant (12), sous l'influence de la gravité, pivote dans une deuxième direction de pivotement (48), la deuxième direction de pivotement (48) étant opposée à la première direction de pivotement (42) ; et
**en ce que** ladite barrière unidirectionnelle (10) comprend en outre une butée (50) qui est montée dans l'un des trous restants (24, 26, 28 ou 30) dans lesquels l'axe d'articulation (32) ne s'étend pas.

2. Barrière unidirectionnelle selon la revendication 1, dans laquelle ledit au moins un trou formé dans la deuxième aile (22) comprend un troisième trou (28), dans laquelle l'axe d'articulation (32) dans la première position de montage et dans la deuxième position de montage s'étend à travers le troisième trou (28).

3. Barrière unidirectionnelle selon la revendication 1, dans laquelle ledit au moins un trou formé dans la deuxième aile (22) comprend un troisième trou (28) et un quatrième trou (30), dans laquelle l'axe d'articulation (32) dans la première position de montage s'étend à travers le troisième trou (28), et dans laquelle l'axe d'articulation (32) dans la deuxième position de montage s'étend à travers le quatrième trou (30).

4. Barrière unidirectionnelle selon la revendication 3, dans laquelle une droite passant par le premier trou (24) et le quatrième trou (30) est parallèle à l'axe longitudinal (18), et/ou dans laquelle une droite passant par le deuxième trou (26) et le troisième trou (28) est parallèle à l'axe longitudinal (18).

5. Barrière unidirectionnelle selon l'une quelconque des revendications précédentes, dans laquelle la butée (50) comprend un boulon et un écrou.

6. Barrière unidirectionnelle selon l'une quelconque des revendications précédentes, dans laquelle l'axe d'articulation (32) à une première extrémité est pourvu d'une tête (52) et dans laquelle la barrière unidirectionnelle est en outre pourvue d'une goupille fendue (54) qui peut être montée à une deuxième extrémité de l'axe d'articulation (32).

7. Barrière unidirectionnelle selon l'une quelconque des revendications précédentes, dans laquelle le support pivotant (12) peut pivoter sur un angle de pivotement compris dans l'intervalle de 70 à 110°.

8. Barrière unidirectionnelle selon l'une quelconque des revendications précédentes, dans laquelle le cadre (14) est pourvu d'un moyen de montage (62) pour monter le cadre (14) sur le support ou le mur.

9. Ensemble comprenant deux barrières unidirectionnelles selon l'une quelconque des revendications précédentes.

10. Ensemble selon la revendication 9, dans lequel l'axe d'articulation (32) d'une première des deux barrières unidirectionnelles (10) est dans la première position de montage et dans lequel l'axe d'articulation (32) d'une deuxième des deux barrières unidirectionnelles (10) est dans la deuxième position de montage.
